# EUROPEAN PATENT SPECIFICATION

(11) **EP 2 386 473 B1**
(45) Date of publication and mention of the grant of the patent: **31.10.2012**
(21) Application number: 11176887.5
(22) Date of filing: 27.11.2008
(51) Int. Cl.: B62K 27/00, B60D 1/06, B62B 1/12, B62B 7/02, B62B 7/12, B62B 9/00, B62K 27/12, B60G 3/14, B60G 13/00

(54) **Light transport vehicle**
Leichttransportfahrzeug
Véhicule de transport légère

(30) Priority: 30.11.2007 US 991225 P
(43) Date of publication of application: 16.11.2011
(62) Divisional of application: 08853387.2
(73) Proprietor: Assaf, Imad, Calgary, AB T3H 3A5 (CA)
(72) Inventor: Assaf, Imad, Calgary, AB T3H 3A5 (CA)
(74) Representative: Schaich, Axel

(56) References cited:
- DE-A1- 3 139 936
- JP-A- 2009 132 378
- US-A- 5 816 357
- US-A- 5 941 542

## Description

### RELATED APPLICATIONS

This application claims the benefit of priority to US provisional application 60/991,225 filed November 30, 2007.

### FIELD OF THE INVENTION

The invention relates an adjustable suspension system for a smoother ride for the occupant and/or cargo in a light transport vehicle (LTV).

### BACKGROUND OF THE INVENTION

Joggers, strollers and bicycle trailers are well known light transport vehicles (LTV) used for transporting small children, animals and/or cargo. Besides offering durability, function and safety, the LTV is to provide for a smooth ride to the occupant and/or cargo.

More specifically, there has been a need for an LTV that includes an adjustable suspension system which improves safety, performance and/or comfort to the user/cargo/occupants of the LTV.

U.S. Pat. No. 5,941,542 provides an example of prior art and shows preamble of claim 1.

As a result, there has been a need for an adjustable suspension as it is an important feature of LTVs, especially when transporting children. Generally, existing adjustable suspensions are hard to adjust, and do not provide the required performance. As a result, there has been a need for an adjustable suspension that is easy to adjust and provides the desired performance of a smooth ride.

### SUMMARY OF THE INVENTION

In accordance with the invention, an adjustable suspension system for a light transport vehicle is described. The light transport vehicle having a vehicle frame and a transportation apparatus, the adjustable suspension having: a suspension body for operative connection to the lower chassis; a pivot arm pivotally connected to the suspension body, the pivot arm having: a first end for connection to the transportation apparatus; a first suspension connector for connection with a main suspension member, the main suspension member having: a pivoting end for pivotal connection to the first suspension connector; and, a sliding end for sliding support and engagement within an adjustment track within the suspension body; the sliding end operatively connected to an adjustment lever on the suspension body for operative movement of the sliding end within the adjustment track; wherein movement of the sliding end within the adjustment track changes the relative angle of the main suspension member with respect to the first suspension connector such that movement of the pivot arm with respect to the suspension body requires a different force depending on the relative angle of the main suspension member with respect to the pivot arm.

In a further embodiment, the pivot arm includes a second suspension connector for engagement with a non-adjustable suspension member operatively connected to the suspension body. In another embodiment, the suspension system includes a connection system for operatively connecting two or more suspension systems together.

### BRIEF DESCRIPTION OF THE DRAWINGS

The invention is described with reference to the drawings in which:
**Figure 1a, 1b** **and** **1c** are a perspective view, front view and exploded view of an embodiment of a suspension system of the present invention.
**Figure 2a and 2b** are front views of the suspension system of Figure 1a with a cut to show the internal parts. Figure 2a illustrates the suspension system when no loads or impacts are applied to the suspension system and Figure 2b illustrates the suspension system of Figure 2a when a load or impact is applied to suspension system.
**Figure 3a, 3b and 3c** are front views of the suspension system of Figure 1a with a cut to show the internal parts. Figure 3a illustrates the system set to the softest adjustment, Figure 3b illustrates the system set to an intermediate adjustment and Figure 3c illustrates the system set to the hardest adjustment.
**Figure 4** is a perspective view of the suspension system installed onto a transport vehicle;
**Figures 5a, 5b****,** **5c and 5d** are views of a light transport vehicles benefiting from an adjustable suspension system of the present invention.. The vehicle in

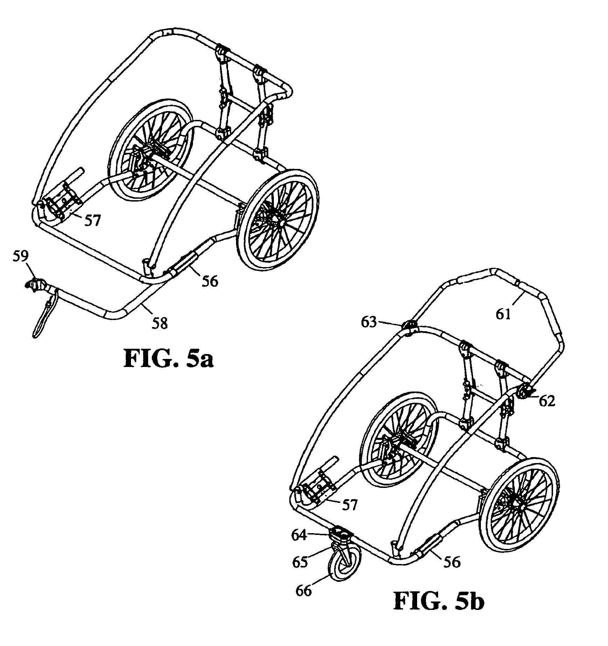

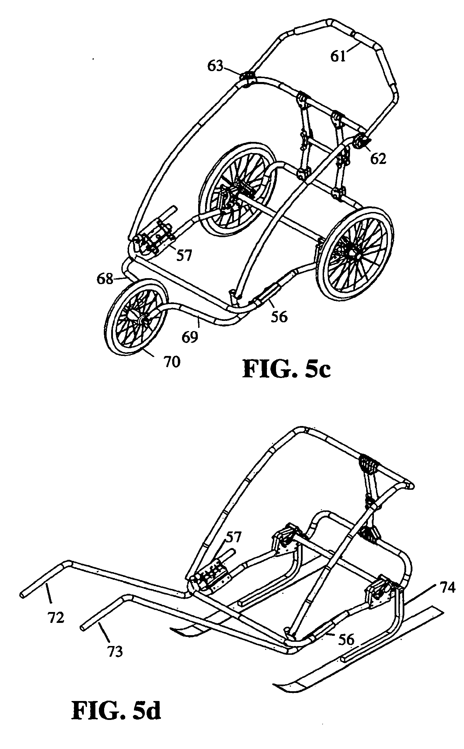

Figure 5a is useable as a bicycle trailer, the vehicle in Figure 5b is useable as a stroller, the vehicle in Figure 5c is useable as a jogging stroller and the vehicle in Figure 5d is useable as a sled.

### DETAILED DESCRIPTION

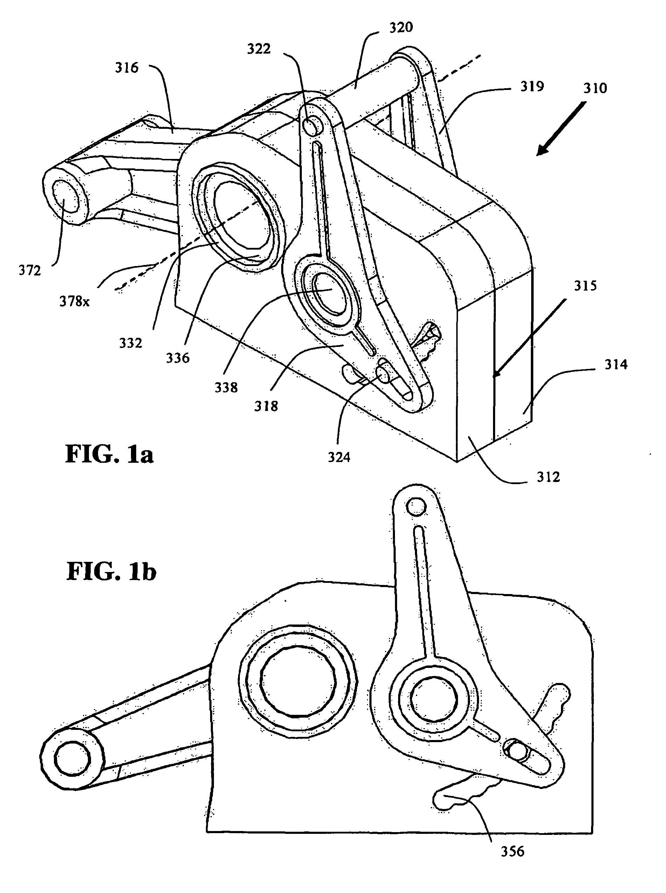

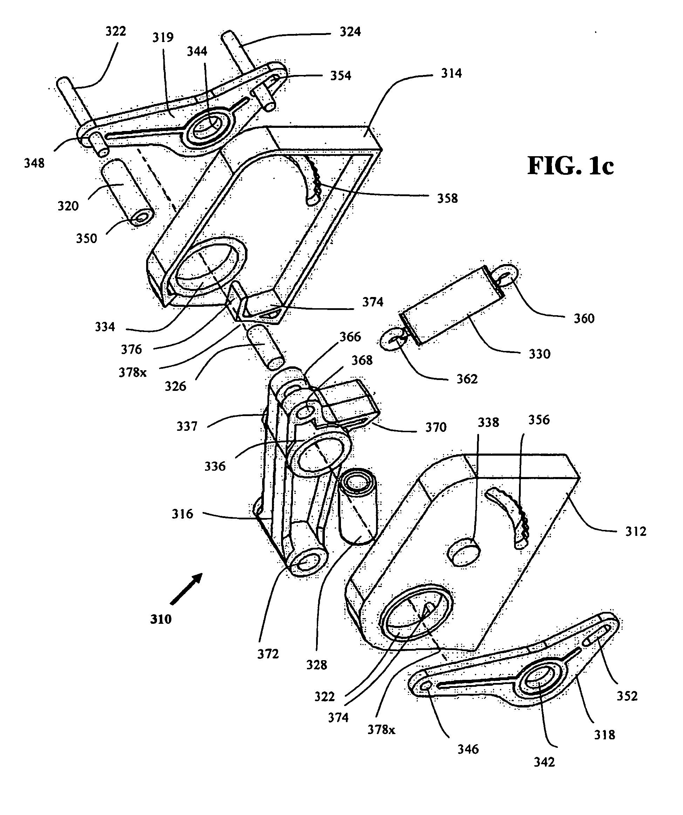

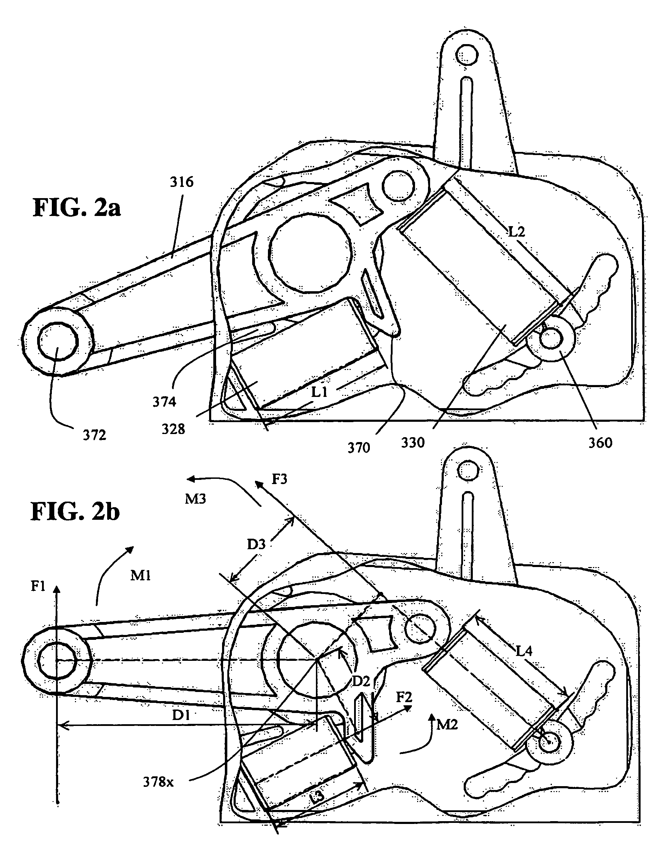

In Figures 1a to 5, a suspension system of the present invention is illustrated. Figures 1a, 1b and 1c show an illustration of an embodiment of suspension system 310 of the present invention. The illustrated suspension system 310 has first housing 312, second housing 314, pivot arm 316, adjustment levers 318 and 319, spacer 320, fastener 322, fastener 324, short pin 326, first resilient member 328 and second resilient member 330. First housing 312 and second housing 314 join together to form suspension housing 315 (Figure 1a), suspension housing 315 provide mounting features for the rest of the suspension system components. First housing 312 and second housing 314 can be secured together through snapping features, fasteners, fusing or any other suitable methods, not shown. Pivot arm 316 is installed into suspension housing 315 by positioning pivot arm 316 so that pivot boss 336 is inserted in pivot housing 332 and pivot boss 337 is inserted in pivot housing 334. Pivot bosses 336 and 337 are free to rotate inside pivot housings 332 and 334. Adjustment levers 318 and 319 are installed onto the suspension housing 315 by inserting pivot boss 338 into pivot housing 342 and inserting pivot boss 340 (not shown) into pivot housing 344. Spacer 320 is situated between adjustment levers 318 and 319. Aperture 350 of spacer 320 is aligned with aperture 346 of adjustment lever 318 and aperture 348 of adjustment lever 319 and fastener 322 is inserted to hold adjustment levers 318 and 319 and spacer 320 together. Fastener 322 can be in the form of bolt and nut, rivet or any other suitable form. Fastener 324 extends through slots 352 of adjustment lever 318, slot 356 of first housing 312, second loop end 360 of second resilient member 330, slot 358 of second housing 314 and slot 354 of adjustment levers 319. Fastener 324 is secured such that it does not move along it long axis but is free to rotate about its long axis, move along slots 352 and 354 of adjustment levers 318 and 319, and move along slots 356 and 358 of housings 312 and 314. Fastener 324 can be in the form of a bolt and nut, rivet or any other suitable form. First loop end 362 of second resilient member 330 is inserted in opening 366 of pivot arm 316, pin 326 is inserted through aperture 368 of pivot arm 316 and first loop end 362 to pivotally secure first loop end 362 to pivot arm 316. First resilient member 328 is installed such that when suspension system 310 is assembled, first resilient member 328 is captured between tab feature 370 of pivot arm 316 and walls of suspension housing 315 (Figure 2a). Pivot arm 316 further comprises an aperture 372 for insertion of an axle to support wheels or other devices such as skis.

Suspension adjustment is required to compensate for load variation in the transport vehicle. In general, a stiffer suspension is desired when transporting a heavier load. Figures 2a and 2b illustrate the work mechanism of a suspension system of the present invention. Figures 2a and 2b are shown with a cut in first housing 312 to better illustrate the internal parts. Figure 2a illustrates the suspension system 310 when no loads or impacts are applied. In this case, pivot arm 316 is pivoted so that pivot arm 316 is resting on walls 374 and 376 of housings 312 and 314. Aperture 372 is at its lowest position, first resilient member 328 is at its maximum installed length (L1) and second resilient member 330 is at its maximum installed length (L2). Length (L1) might be shorter than free length of the first resilient member 328 if pre loading is required in first resilient member 328 and length (L2) might be shorter than free length of second resilient member 330 if pre loading is required in second resilient member 330. Figure 2a shows second loop end 360 of second resilient member 330 situated in an intermediate position between slots 356 and 358 of housings 312 and 314.

Figure 2b illustrates suspension system 310 when a load or impact F1 is applied. In this case, the pivot arm 316 is pivoted upward and aperture 372 is raised from its lowest position and resilient members 328 and 330 are compressed. First resilient member 328 resists compression with force F2 and second resilient member 330 resists compression with force F3. Compression in resilient members 328 and 330 increase until force moments about pivot centre of pivot arm 316 (axis 378x) are balanced. At the balance position, the force moment M1 created by the load or impact F1, about pivot axis 378x, will be equal in value and opposite in direction to the sum of resistance force moments M2 and M3 (Resistance force moment M2 is created by resistance force F2 of resilient member 328, about pivot axis 378x, and resistance force moment M3 is created by resistance force F3 of second resilient member 330, about pivot axis 378x). As the value of F1 is decreased (by reducing the load or diminishing of the impact) M1 value will decrease, and M2 and M3 will cause the pivot arm to pivot downward and aperture 372 to lower until a new balance position is established.

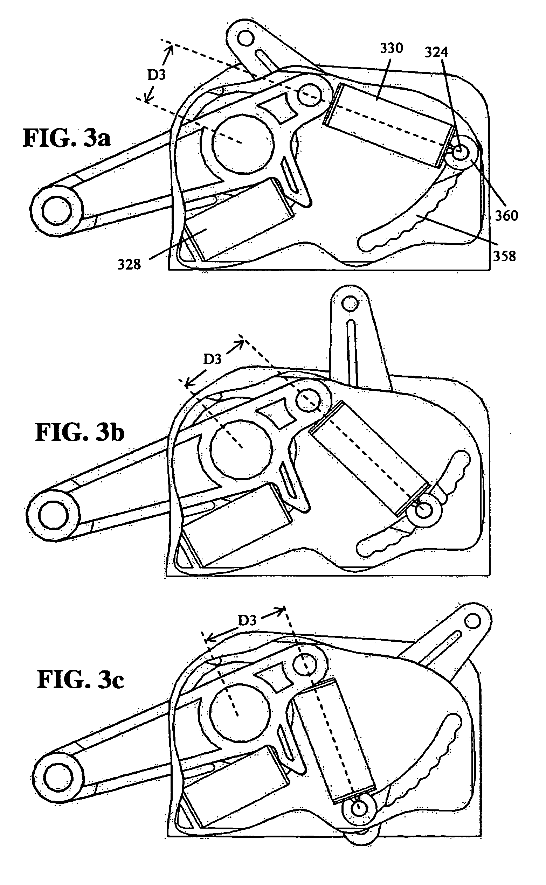

Figures 3a, 3b and 3c show three of the different adjustment of the suspension system 310. Adjustment is made by changing the location of second loop end 360. This location change is facilitated by sliding fastener 324, inserted through second loop end 360, along slots 356 and 358. Figure 3a shows the softest adjustment. At this adjustment, second resilient member 330 will have the least resistance force moment M3 (least compression of second resilient member 330 per unit of rotation of pivot arm 316 and smallest offset D3), Figure 20b shows an intermediate adjustment, at this adjustment, second resilient member 330 will have larger resistance force moment M3 than in Figure 3a (larger compression of second resilient member 330 per unit of rotation of pivot arm 316 and larger offset D3) and Figure 3c shows the stiffest adjustment, at this adjustment, second resilient member 330 will have the largest resistance force moment M3 (largest compression of second resilient member 330 per unit of rotation of pivot arm 316 and largest offset D3).

While the shown embodiment illustrates the suspension system 310 with two resilient members, the system can function with a single resilient member or more when resilient members are selected properly, if more than one resilient member is used, they can be identical or they can have different resistance, size or form. A resilient member can be formed of, or any combination of, mechanical spring, polymer, gas cylinder, pneumatic cylinder or hydraulic cylinder, or any other suitable members.

The shown embodiment illustrates resilient members that are utilized in compression. It should be understood that compression resilient members, tension resilient members, torsion resilient members or any combination of the preceding can be used in suspension system 310, mounting points and orientation of the resilient members will need to be adjusted to provide the intended function and performance.

Adjustment levers 318 and 319 are used to facilitate adjustment of suspension system 310. As spacer 320 is moved, adjustment levers 318 and 319 are pivoted about pivot boss 338 and 340. The slotted ends 352 and 354 move fastener 324 (inserted through second loop end 360) along slots 356 and 358 to the desired adjustment location. As shown in the illustrations, slots 356 and 358 are formed in such way to prevent accidental sliding of fastener 324.

As explained above, suspension systems are useful in absorbing impact and dampening vibration between the transport means and cargo support of a transport vehicle. The suspension system is intended to be used with light transport vehicles useful for transporting children, animals and/or cargo, such as a bicycle trailer, stroller, sled, or other vehicles. Suspension system 310 can be mounted onto a vehicle frame by various ways, including (but are not limited to): fusing, riveting, fastening and clamping.

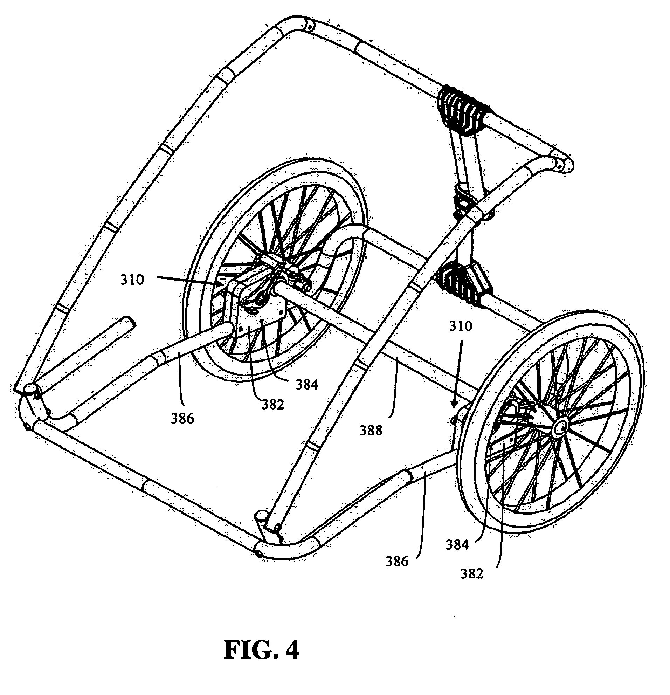

In Figure 4, housings 312 and 314 have lower mounting extensions 380 (not shown - equivalent to 382) and 382 with holes 384 through them so they can be bolted to frame member 386. While Figure 4 shows two suspension systems 310 mounted onto the vehicle frame 386. One suspension system could be mounted in an intermediate position between the vehicles transport means or any other number of suspension systems in appropriate locations to provide the desired function and performance.

In the illustration of Figure 4, an added cross bar 388 is extended between suspension systems 310. Cross bar 388 increases the stability of suspension systems 310 on vehicle frame 386 and can be mounted on any suitable location on the suspension system 310. It should be understood that while the presence of cross bar 388 is beneficial, it is not absolutely necessary.

Suspension housing 315, pivot arm 316 and adjustment levers 318 and 319 are formed of durable, rigid and strong material such as different polymers or metal. Forming processes include (but are not limited to): casting, injection molding, pressure forming and machining.

In Figure 5a, a vehicle is shown with two suspension systems 310. The vehicle is useful as a bicycle trailer.

In Figure 5b, a vehicle is shown with two suspension systems 310. The vehicle is useful as a stroller.

In Figure 5c, a vehicle is shown with two suspension systems 310. The vehicle is useful as a jogging stroller (for fast walking or running).

In Figure 5d, a vehicle is shown with two suspension systems 310. The vehicle is useful as a sled.

## Claims

1. An adjustable suspension system (310) for a light transport vehicle having a vehicle frame and a transportation apparatus, the adjustable suspension system comprising:
a suspension body (312, 314) for operative connection to the vehicle frame;
and, a pivot arm (316) pivotally connected to the suspension body (312, 314), the pivot arm (316) having:
i. a first end for connection to a transportation apparatus; and,
ii. a first suspension connector for connection with a main suspension member (330), the main suspension member having:
a pivoting end (362) for pivotal connection to the first suspension connector; and,
a sliding end (360) for sliding support and engagement within an adjustment track (356) within the suspension body;
the sliding end operatively connected to an adjustment lever (318, 319) for operative movement of the sliding end (360) within the adjustment track (356);
wherein movement of the sliding end (360) within the adjustment track (356) changes the relative angle of the main suspension member (330) with respect to the first suspension connector such that movement of the pivot arm with respect to the suspension body (312, 314) requires a different force depending on the relative angle of the main suspension member (330) with respect to the first suspension connector.

2. An adjustable suspension system (310) as in claim 1 wherein the pivot arm includes a second suspension connector for engagement with a non-adjustable suspension member (328) operatively connected to the suspension body (312, 314).

3. An adjustable suspension system (310) as in claim 1 wherein the suspension system includes a connection system for operatively connecting two or more suspension systems (310) together.

## Patentansprüche

1. Einstellbares Federungssystem (310) für ein Leichttransportfahrzeug mit einem Fahrzeugrahmen und einer Transportvorrichtung, wobei das einstellbare Federungssystem beinhaltet:
ein Federungsgehäuse (312, 314) für eine Wirkverbindung mit dem Fahrzeugrahmen; und
einen Schwenkarm (316), der schwenkbar mit dem Federungsgehäuse (312, 314) verbunden ist, wobei der Schwenkarm (316) aufweist:
i- ein erstes Ende zur Verbindung mit der Transportvorrichtung; und
ii- einen ersten Federungsverbinder zur Verbindung mit einem Hauptfederungselement (330), wobei das Hauptfederungselement aufweist:
ein schwenkendes Ende (362) zur schwenkbaren Verbindung mit dem ersten Federungsverbinder, und
eine gleitendes Ende (360) für eine Gleitauflage und einen Eingriff innerhalb eines Verstellwegs (356) innerhalb des Federungsgehäuses;
wobei das gleitende Ende wirkend mit einem Einstellhebel (318, 319) für eine Wirkbewegung des verschiebbaren Endes (360) innerhalb des Verstellwegs (356) verbunden ist;
wobei die Bewegung des gleitenden Endes (360) innerhalb des Verstellwegs (356) den relativen Winkel des Hauptfederungselements (330) in Bezug auf den ersten Federungsverbinder derart ändert, dass die Bewegung des Schwenkarms in Bezug auf das Federungsgehäuse (312, 314) eine unterschiedliche Kraft in Abhängigkeit von dem relativen Winkel des Hauptfederungselements (330) in Bezug auf den ersten Federungsverbinder erfordert.

2. Einstellbares Federungssystem (310) nach Anspruch 1, bei dem der Schwenkarm einen zweiten Federungsverbinder für einen Eingriff mit einem nicht einstellbaren Federungselement (328), das wirkend mit dem Federungsgehäuse (312, 314) verbunden ist, beinhaltet.

3. Einstellbares Federungssystem (310) nach Anspruch 1, bei dem das Federungssystem ein Verbindungssystem zum wirkenden Verbinden von zwei oder mehr Aufhängungssystemen (310) miteinander beinhaltet.

## Revendications

1. Système de suspension ajustable (310) pour un véhicule de transport léger avec un châssis de véhicule et un appareil de transport, le système de suspension ajustable comprenant:
une boîte de suspension (312, 314) pour une liaison opérante au châssis du véhicule; et
un bras de pivotement (316) relié pivotable à la boîte de suspension (312, 314), le bras de pivotement (316) comportant:
i- une extrémité première pour une connexion au appareil de transport; et
ii- un connecteur de suspension premier pour une connexion avec un élément de suspension principale (330), l'élément principal de suspension comportant:
une extrémité pivotant (362) pour une connexion de pivotement au connecteur de suspension premier; et
une extrémité coulissante (360) pour un appui coulissant et un engagement dans une piste d'ajustage (356) dans la boîte de suspension;
où l'extrémité coulissante est fonctionnellement reliée à un levier d'ajustage (318, 319) pour un mouvement opératif de l'extrémité coulissante (360) dans la piste d'ajustage (356);
où le mouvement de l'extrémité coulissante (360) dans la piste d'ajustage (356) modifie l'angle relatif de l'élément principal de suspension (330) par rapport au connecteur des premier de telle sorte que le mouvement du bras de pivotement par rapport à la boîte de suspension (312 , 314) nécessite une force différente en fonction de l'angle relatif de l'élément de suspension principal (330) par rapport au connecteur de suspension premier.

2. Système de suspension ajustable (310) selon la revendication 1, où le bras de pivotement comporte un connecteur de suspension seconde pour un engagement avec un élément de suspension non ajustable (328) qui est fonctionnellement relié à la boîte de suspension (312, 314).

3. Système de suspension ajustable (310) selon la revendication 1, où le système de suspension comporte un système de connexion pour connecter fonctionnellement deux ou plusieurs systèmes de suspension (310) ensemble.
